# EUROPEAN PATENT APPLICATION

(11) **EP 4 699 738 A1**
(43) Date of publication of application: **25.02.2026**
(21) Application number: 25189993.6
(22) Date of filing: 16.07.2025
(51) Int. Cl.: B23P 19/02

(54) **ELECTRO-MECHANICAL WHEELSET PRESS**

(30) Priority: 24.07.2024 IT 202400003160 U
(71) Applicant: Officine Meccaniche B.B.M. S.p.A., 36028 Rossano Veneto (VI) (IT)
(72) Inventor: BIN, Carlo, 36028 Rossano Veneto VI (IT)
(74) Representative: Giopato, Paolo

(57) **Abstract**

The present disclosure relates to a wheelset press (100) for mounting or dismounting components of an axle of a rail vehicle, wherein the wheelset press (100) comprises:
- a support frame (10),
- at least one electric motor (20),
- a load application body (30),
- at least one satellite roller screw (40) connected with the at least one electric motor (20) and the load application body (30).

Furthermore, the at least one electric motor (20) is configured to drive the at least one satellite roller screw (40), and the satellite roller screw (40) is configured to convert an incoming rotary motion from the electric motor (20) into a linear motion transmitted to the load application body (30).

In addition, the load application body (30) is configured to support the axle of a railway vehicle and to apply a fitting force to the axle of a railway vehicle by means of linear motion in such a way as to allow the axle components of a railway vehicle to be mounted or dismounted.

## Description

The present disclosure generally refers to a wheelset press for mounting or dismounting wheels, brake discs and other components for an axle of a railway vehicle by fitting.

The mounting or dismounting of components for an axle of a railway vehicle by means of fitting, i.e. by joining the axle and each component by means of an interlocking connection, is known in the state of the art.

These operations can be carried out using fitting presses, also known as wheel-set presses, which are machines that generally use hydraulic cylinders to transmit a fitting force to the components to be mounted or dismounted.

Known wheelset presses, therefore, generally include a hydraulic unit for storing, filtering and cooling the oil used to feed and control the hydraulic cylinders.

In addition, for the control of the clamping force, known presses use pressure transducers configured to convert the pressure measurement of the hydraulic thrust cylinder into a measurement of the thrust force to achieve the fitting.

The basis of the present disclosure is a recognition by the inventor of the present disclosure that wheelset presses such as those made available to date by the known technique, while advantageous in many respects, have certain limitations.

Specifically, known presses require a considerable amount of oil to operate the hydraulic cylinders. In addition, the oil storage, filtering and cooling unit requires frequent maintenance to ensure proper operation.

In addition, the replacement and disposal of the oil used in the press as well as the filters and hoses is periodically required.

Furthermore, the measurement of the fitting force is influenced by several factors, such as oil temperature and wear of the hydraulic cylinder guide seals. Therefore, the reproducibility of the measurement is difficult and the measurement is not always reliable.

The present disclosure starts from the technical problem of providing a wheelset press to meet the above-mentioned needs with reference to the prior art and/or to achieve further advantages.

This is achieved by means of a wheelset press according to the respective independent claim. Secondary features of the object of the present disclosure are defined in the corresponding dependent claims.

In particular, according to the present disclosure, in order to improve the prior art, it is proposed to realise an electro-mechanical type of wheelset press comprising a support frame, at least one electric motor, a load application body and at least one satellite roller screw connected to the at least one electric motor and the load application body.

In particular, the at least one electric motor is configured to drive the at least one satellite roller screw, which is configured to convert an incoming rotary motion from the electric motor into a linear motion transmitted to the load application body.

Furthermore, the load application body is configured to support an axle of a railway vehicle and to apply, by means of the linear motion transmitted by at least one satellite roller screw, a fitting force to the axle of a railway vehicle in such a way that the axle components of a railway vehicle can be mounted or dismounted.

That is to say, the wheelset press according to the present disclosure is essentially of a fully electro-mechanical type, i.e. it allows the fitting of wheels, brake discs and other components of an axle of a rail vehicle, both in assembly and disassembly, exclusively by means of at least an electric motor, i.e. without the use of a hydraulic and/or oil-hydraulic system to provide the fitting force.

Numerous advantages over the prior art can therefore be achieved by means of the electro-mechanical wheelset press according to this disclosure.

Firstly, the noise level of the electro-mechanical wheelset press is significantly reduced compared to known hydraulic wheelset presses, preferably remaining below 70 dBa, and is also only present during press movement, unlike known hydraulic wheelset presses.

In addition, the maintenance required for the wheelset press is significantly reduced, as components such as hydraulic cylinder oil, filters and connecting pipes, which require frequent replacement and disposal in wheelset presses according to prior art, are not required.

Furthermore, the electro-mechanical type of wheelset press according to the present disclosure achieves a reduced energy consumption compared to known wheelset presses, as it is more efficient due to the elimination of energy waste due to internal dissipation of the oil flow valves present in known wheelset presses. In addition, at least one electric press feed motor can only be operated while the wheelset press is in use, ensuring lower energy consumption, and it also does not require alternative cooling systems as is the case with known wheelset presses.

In addition, the electro-mechanical wheelset press according to the present disclosure makes it possible to reduce or completely eliminate the generation of dust resulting from, for example, the hydraulic power unit and its cooling system in wheelset presses according to the prior art.

Preferably, the press also includes a load cell positioned along the load application body and configured to measure the fitting force. In this way, it is possible to achieve a more precise and reproducible force measurement than the prior art, as the influence of external factors such as oil temperature and wear on the seals and guide rings of hydraulic cylinders, as well as any counterpressure generated inside the cylinder during the pushing phase, can be eliminated.

Further advantages, features and methods of use of the subject matter of the present disclosure will be clear from the following detailed description of its forms of embodiment, presented for illustrative and non-limiting purposes.

It is however evident that each embodiment of the subject matter of the present disclosure may present one or more of the advantages listed above; in any event, it is not required that each embodiment simultaneously present all of the advantages listed. Reference will be made to the figures in the accompanying drawings, in which:
- Figure 1 shows a perspective view of a wheelset press according to one embodiment of the present invention;
- Figure 2 shows a perspective view of a detail of the wheelset press of Figure 1.

With reference to the attached figures, one form of a wheelset press is indicated overall by the reference number 100.

In particular, the wheelset press 100 is configured to mount or dismount components of an axle of a railway vehicle and comprises:
- a support frame 10,
- at least one electric motor 20,
- a load application body 30,
- at least one satellite roller screw 40 connected with the at least one electric motor 20 and the load application body 30.

Further, the at least one electric motor 20 is configured to drive the at least one satellite roller screw 40, and the at least one satellite roller screw 40 is configured to convert an incoming rotational motion from the electric motor 20 into a linear motion transmitted to the load application body 30. That is to say, the at least one satellite roller screw 40 is configured to be set into rotation by the at least one electric motor 20, such that it converts said rotation into a linear motion, i.e. a translation, and is further configured to transmit said linear motion, to the load application body 30 which can consequently move.

Further, the load application body 30 is configured to support the axle of a railway vehicle and to apply a fitting force to the axle of a railway vehicle, by means of the linear motion transmitted by the at least one satellite roller screw 40, in such a way as to allow components to be mounted to or dismounted from the axle of a railway vehicle. That is, the load application body 30 is configured to exert a fitting force on the axle of a railway vehicle or on the components to be mounted on or dismounted from on the axle, in such a way as to enable them to be connected by interlocking, i.e. fitting.

Preferably, the load application body 30 comprises a thrust beam 31, directly connected to the at least one satellite roller screw 40, and a rod 32 configured to slide through a guide bush of the support frame 10. Further preferably, the rod 32 comprises a first end associated with the thrust beam 31 and a second end, opposite the first end, configured to apply the fitting force to the axle of a railway vehicle. That is, preferably the rod 32 extends between the thrust beam 31, which is directly connected to the at least one satellite roller screw 40, and the axle of a rail vehicle on which the fitting force is to be applied. In particular, the rod 32 is preferably supported by the support frame 10 via the guide bush through which it is configured to slide during said linear motion.

Preferably, the rod 32 includes a spring-loaded retractable tailstock positioned on the second end configured to transmit the fitting force to the axle of a railway vehicle.

Preferably, the wheelset press 100 further comprises a resisting element configured to retain components to be mounted on or dismounted from the axle of a railway vehicle. That is, the resisting element may be a flush element configured to provide a feedback to the fitting force, so as to enable the mounting or dismounting operations of the components of the axle of a railway vehicle.

Preferably, the axle components of a railway vehicle are wheels, brake discs and/or other axle components of a railway vehicle.

Preferably, the wheelset press 100 comprises a load cell 60 positioned along the load application body 30 and configured to measure the fitting force. Preferably, for example, the load cell 60 may be mounted near the second end of the rod 32 configured to apply the fitting force to the axle of a railway vehicle, so as to enable accurate measurement of the fitting force.

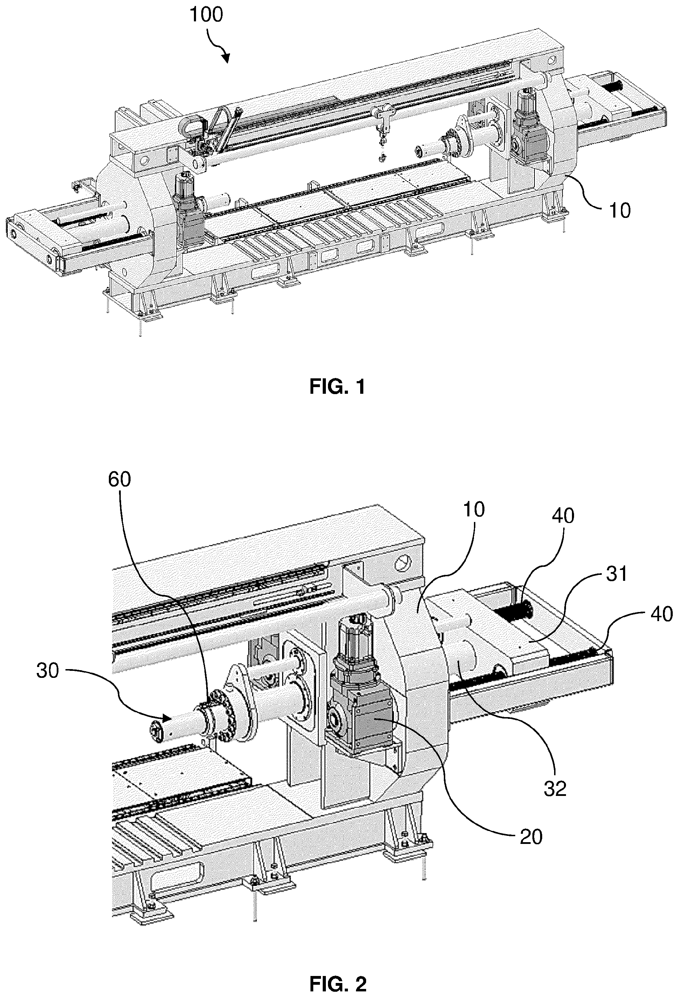

Preferably, with particular reference to Figure 1, the wheelset press 100 according to the present disclosure has two symmetrical portions defining two symmetrical parts of the support frame 10. In particular, preferably each symmetrical portion of the fitting press 100 comprises a pair of electric motors 20, a load application body 30 and a pair of satellite roller screws 40 for transmitting linear motion to the respective load application body 30. In this way, it is possible to maximise the fitting force and optimise the stability of the wheelset press 100 during fitting.

That is to say, the wheelset press 100 preferably comprises two opposite and symmetrically equal portions, wherein preferably the two symmetrical portions are configured to accommodate, between the load application body 30 of one of the two symmetrical portions and the load application body 30 of the other of the two symmetrical portions, the same axle of a rail vehicle in a manner that allows for fitting on both ends of the axle of a railway vehicle.

The subject matter of the present disclosure has thus far been described with reference to its embodiments. It is to be understood that there may be other embodiment pertaining to the same inventive core, all of which fall within the scope of protection of the claims set forth below.

## Claims

1. Wheelset press (100) for mounting or dismounting components of an axle of a railway vehicle, wherein said wheelset press (100) comprises:
- a support frame (10),
- at least one electric motor (20),
- a load application body (30),
- at least one satellite roller screw (40) connected to said at least one electric motor (20) and said load application body (30),
wherein said at least one electric motor (20) is configured to drive said at least one satellite roller screw (40), and wherein said satellite roller screw (40) is configured to convert an incoming rotary motion from said electric motor (20) into a linear motion transmitted to said load application body (30),
and in which said load application body (30) is configured to support said axle of a railway vehicle and to apply a fitting force to said axle of a railway vehicle by means of said linear motion in such a manner as to permit the assembly or disassembly of the components of said axle of a railway vehicle.

2. Wheelset press (100) according to the preceding claim, wherein said load application body (30) comprises a thrust beam (31), directly connected to said at least one satellite roller screw (40), and a rod (32) configured to slide through a guide bush of said support frame (10), wherein said rod (32) comprises a first end associated with said thrust beam (31) and a second end, opposite said first end, configured to apply said fitting force to said axle of a railway vehicle.

3. Wheelset press (100) according to the preceding claim, wherein said rod (32) comprises a spring-loaded retractable tailstock positioned on said second end and configured to transmit the fitting force to said axle of a railway vehicle.

4. Wheelset press (100) according to any of the preceding claims, further comprising a resisting element configured to retain components to be mounted on or dismounted from said axle of a railway vehicle.

5. Wheelset press (100) according to any of the preceding claims, wherein said components of said axle of a railway vehicle are wheels, brake discs and/or other components of an axle of a railway vehicle.

6. Wheelset press (100) according to any of the preceding claims, comprising a load cell (60) positioned along said load application body (30) and configured to measure said fitting force.

7. Wheelset press (100) according to any of the preceding claims and having two symmetrical portions defining two symmetrical parts of said support frame (10), wherein each symmetrical portion of said wheelset press (100) comprises a pair of electric motors (20), a load application body (30) and a pair of satellite roller screws (40) for transmitting linear motion to the respective load application body (30).
